# EUROPÄISCHE PATENTSCHRIFT

(11) **EP 1 182 495 B1**
(45) Veröffentlichungstag und Bekanntmachung des Hinweises auf die Patenterteilung: **08.11.2006**
(21) Anmeldenummer: 01119292.9
(22) Anmeldetag: 10.08.2001
(51) Int. Cl.: G03B 9/34, G03B 9/62

(54) **Verschluss für eine fotografische Kamera**
Shutter of a photographic camera
Obturateur d'une caméra photographique

(30) Priorität: 23.08.2000 DE 10041254
(43) Veröffentlichungstag der Anmeldung: 27.02.2002
(73) Patentinhaber: Leica Camera AG, 35606 Solms (DE)
(72) Erfinder: Kranz, Gerhard, Dr., 35576 Wetzlar (DE); Knapp, Christoph, 65599 Dornburg 3 (DE)
(74) Vertreter: Stamer, Harald

(56) Entgegenhaltungen:
- DE-A- 1 945 709
- US-A- 3 825 942
- US-A- 4 306 797
- US-A- 4 394 081
- US-A- 4 420 235

## Beschreibung

Die Erfindung betrifft einen Verschluß für eine fotografische Kamera mit einem ersten und einem zweiten vorgespannten Verschluß-Vorhang, die jeweils durch eine erste und eine zweite schwenkbar gelagerte Halteklinke im Zusammenwirken mit einer ersten und zweiten Vorhangklinke im gespannten Zustand gehalten werden, wobei die erste Halteklinke mit einem Kamera-Auslöser zur Freigabe des ersten Vorhangs gekoppelt ist und die zweite Halteklinke mit einer in Abhängigkeit von der Auslösung des ersten Vorhangs gesteuerten Auslösevorrichtung zur Freigabe des zweiten Vorhangs gekoppelt ist.

Zur zeitlich gesteuerten Belichtung eines Films weisen Kameras vor der Filmebene einen Verschluß auf, der aus zwei zeitlich nacheinander ablaufenden Vorhängen besteht. Die Vorhänge können durch Metalllamellen oder Tuchrollos gebildet werden. Beide Vorhänge werden mit dem Filmeinzug über ein Federwerk gespannt und durch ein Klinkenhebelwerk in diesem Zustand gehalten. Bei einer elektromechanischen Ausführung werden die Vorhänge durch magnetisch betätigte Klinken gehalten.

Derartige Kamera Verschlüsse sind z.B. aus der DE 1 945 709 A oder der US 4 420 235 A bekannt.

Rein mechanische Federspann- und Klinkenhebelwerke haben den Vorteil, daß sie von einer elektrischen Versorgung unabhängig sind und über einen großen Temperaturbereich funktionsfähig sind. Die mechanischen Anforderungen und der Bauteileaufwand für die Zeitbildung zwischen dem Start des ersten Verschlußvorhangs und dem Start des zweiten Verschlußvorhangs sind jedoch insbesondere für kürzere Verschlußzeiten erheblich. Für die Auslösung der Klinken sind hohe Reibungskräfte zu überwinden. Bei Auslösung des zweiten Verschlußvorhangs durch den Ablauf des ersten Vorhangs wird dieser kurzzeitig abgebremst, so daß die gebildeten Zeiten ungenau werden. Das führt bei sehr kurzen Verschlußzeiten zu Schwierigkeiten in der Abstimmung der mechanischen Elemente und Kräfte.

Haltemagnete für die Verschlußvorhänge haben den Vorteil, daß sie eine elektrisch gesteuerte erste Auslösung und eine darauf bezogene elektronische Zeitbildung erlauben. Der Ablauf der beiden Vorhänge kann unabhängig voneinander gesteuert werden. Nachteilig ist der teilweise hohe Energiebedarf für die Haltemagnete.

Der Erfindung lag die Aufgabe zugrunde, die Vorteile beider Verschlußauslösungen wahlweise nutzbar zu machen. In einer Kamera mit rein mechanisch gesteuerter Verschlußauslösung sollte der vorhandene Einbauraum genutzt werden können, indem durch Verringerung des Bauteileaufwands für ein mechanisches Zeitbildnerwerk Platz für den Einbau von Elektromagneten geschaffen wird. Die Verschlußauslösung über einen gemeinsamen Kameraauslöser sollte möglich sein.

Diese Aufgabe wird bei einem Verschluß der eingangs genannten Art erfindungsgemäß dadurch gelöst, daß der ersten und zweiten Halteklinke jeweils erste und zweite bewegungsauslösende Wirkflächen zugeordnet sind, die jeweils wahlweise mit einer mechanisch gesteuerten oder einer elektronisch gesteuerten Vorhang-Freigabe koppelbar sind. Vorteilhafte Ausgestaltungen und Weiterbildungen ergeben sich aus den Merkmalen der Unteransprüche.

Die nach dem Verschlußaufzug unter Federspannung stehenden Vorhangklinken werden über je eine schwenkbar gelagerte Halteklinke arretiert. Den Halteklinken sind jeweils zwei geometrisch voneinander getrennte Wirkflächen zugeordnet, über die die Arretierung der Klinken wahlweise gelöst werden kann. Vorteilhafterweise werden die Wirkflächen direkt an den Halteklinken vorgesehen. Die Halteklinken können in ihrer Dimensionierung zunächst in einfacher Weise für eine erschütterungssichere Arretierung der Vorhangklinken ausgelegt werden. Sie bilden darüber hinaus einen Hebel, dessen Länge und Form unabhängig davon so gewählt werden kann, daß bei einem Stoß auf eine der Wirkflächen mit vertretbarem Kraftaufwand eine sichere Auslösung der Klinkenverbindung erfolgt.

Jeweils eine der Wirkflächen kann einer rein mechanisch gesteuerten Auslösung der Klinken zugeordnet werden, während die andere Wirkfläche einer elektronisch gesteuerten Auslösung der Klinken zugeordnet werden kann. Die mechanisch gesteuerte Auslösung der Klinken enthält eine mechanische Wirkungskette, an deren Ende ein Ausklinkhebel auf die zugeordnete Wirkfläche an der ersten Halteklinke durch Stoß oder Druck einwirkt. Die elektronisch gesteuerte Auslösung der Klinken enthält einen Elektromagneten mit einem abwerfbaren Ankerhebel, der gegen die jeweils weitere Wirkfläche gestoßen werden kann. Der für diese Bauelemente erforderliche Einbauraum ist relativ gering.

Zur wahlweisen Einstellung der beiden Auslösemöglichkeiten ist ein Exzenter vorgesehen, mit dem die mechanische Wirkungskette in die Funktionsstellung hinein oder aus dieser heraus bewegt werden kann. Der Exzenter wird dabei zweckmäßigerweise mit einem Betriebsarten-Wahlschalter gekoppelt. In einer Stellung, in der der Exzenter die mechanische Wirkungskette in Funktionsstellung bringt, kann dabei in einfacher Weise über die Betätigung eines Schalters die Bestromung für die Elektromagneten unterbrochen werden, so daß Doppelauslösungen sicher vermieden werden.

Der Exzenter ermöglicht auch das Hineinbewegen der mechanischen Wirkungskette in Funktionsstellungen, die mit einer mechanischen Zeitbildung für die aufeinander folgende Auslösung der Klinken gekoppelt sind. Dazu kann die zuerst ausgelöste Vorhangklinke als Kurvenscheibe ausgebildet sein, die in Abhängigkeit von der jeweiligen Stellung eines Steuerhebels für die nachfolgend auszulösende Vorhangklinke früher oder später auf diesen einwirkt. Die Genauigkeit dieser Verschlußzeiteneinstellung ist begrenzt, reicht aber für Standardzeiten durchaus aus.

Als elektrisch ansteuerbare Elektromagnete werden mit Vorteil Impulsmagnete vorgesehen. Diese zeichnen sich dadurch aus, daß ihr Ankerhebel im stromlosen Zustand durch Permanentmagnete gehalten wird und der Abwurf des Ankers nur bei ausreichender Bestromung erfolgt. Die Belastung der Stromquelle in der Kamera kann damit sehr gering gehalten werden. Nachteilig ist jedoch, daß bei einem Abwurf des zuerst ausgelösten Ankers und nachfolgender Stromabschaltung vor dem Abwurf des nachfolgend auszulösenden Ankers der zugehörige Verschlußvorhang offen bleibt. Dies würde zu Fehlbelichtungen führen. Erfindungsgemäß wird daher der Ein-/Aus-Schalter an der Kamera zweistufig ausgebildet, so daß vor einer Stromabschaltung nach Bestromung des ersten Impulsmagneten in jedem Fall noch eine Bestromung des zweiten Impulsmagneten durchgeführt wird.

Zur präzisen Auslösung von Impulsmagneten muß möglichst schnell der bauartspezifische Wert des Abwurfstroms aufgebaut werden. Legt man genau die zum Abwurfstrom gehörende Spannung an den Magneten, dann dauert der Stromaufbau aufgrund vorhandener Induktivitäten zu lange. Legt man dagegen eine höhere Spannung an den Magneten, dann wird der Abwurfstrom kurz durchfahren und dann überschritten. Dadurch baut der Magnet erneut Kraft auf und der Ankerabwurf unterbleibt oder wird unpräzise. Erfindungsgemäß wird daher eine Bestromung mit einem Pegelverlauf gewählt, der mit einem steil ansteigenden, deutlich über der üblichen Abwurfspannung liegenden Signalpegel beginnt und danach schnell auf den bauartspezifischen Abwurfwert abfällt.

Die Erfindung wird nachfolgend anhand von Ausführungsbeispielen beschrieben, die in der Zeichnung schematisch dargestellt sind. Dabei zeigen
- Fig. 1: das Prinzip der mechanisch und elektronisch gesteuerten Wirkungskette der Klinkenauslösung,
- Fig. 2: eine Abwandlung bei der ersten Halteklinke,
- Fig. 3: ein Blockschaltbild der Verschlußauslösung und
- Fig. 4: einen Pegelverlauf für die Ansteuerung der Impulsmagnete.

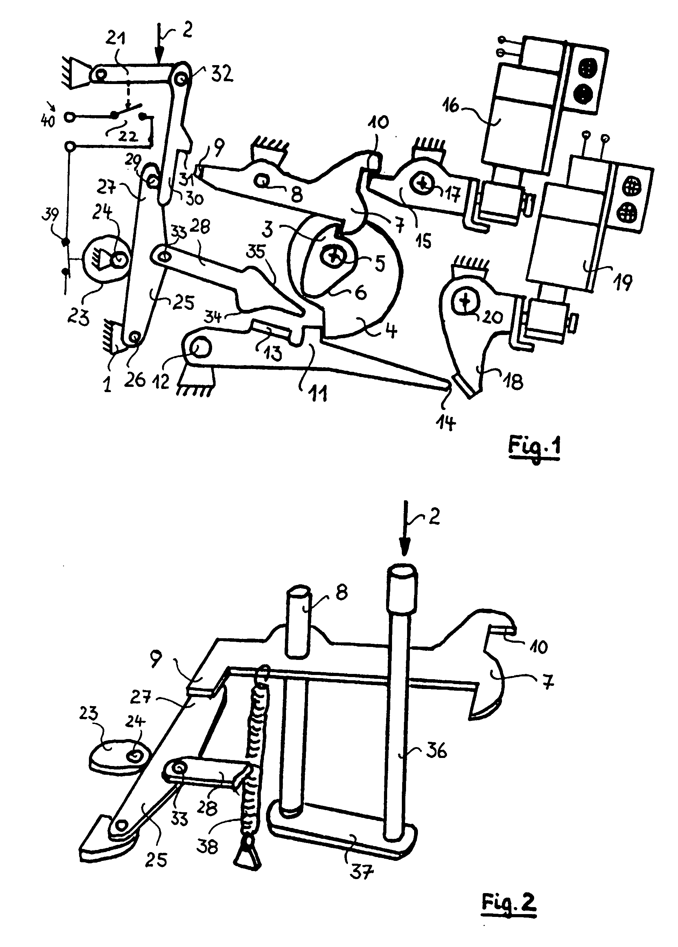

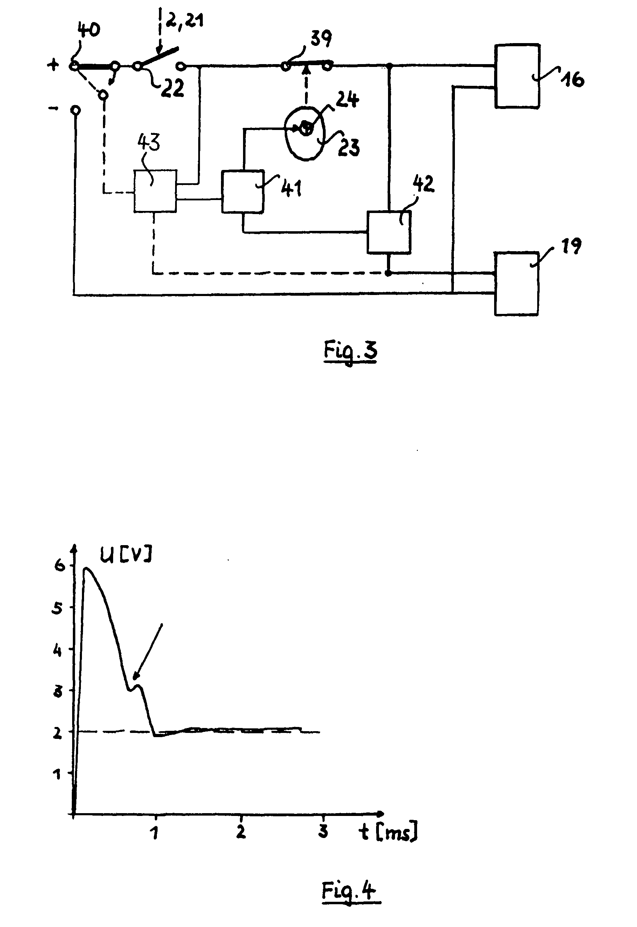

In Fig. 1 sind die mit einem Massesymbol 1 versehenen Dreh- oder Schwenkachsen am nicht weiter dargestellten Kameragehäuse befestigt. Ebenfalls nicht dargestellt ist der in Richtung des Pfeils 2 wirkende Kamera-Auslöseknopf.

Die in Fig. 1 gezeigte Stellung der mechanischen Wirkungskette für die Klinkenauslösung entspricht der Betriebsart für eine elektronisch gesteuerte Verschlußauslösung. Als Verschlußvorhänge sind erste und zweite Rollos vorgesehen, die unter den ersten und zweiten Vorhangklinken 3 und 4 im federgespannten Zustand liegen. Die Vorhangklinken 3, 4 sind mit konzentrisch zueinander angeordneten Rollowalzen verbunden, von denen nur die Drehachse 5 des ersten Rollos zu sehen ist.

Die Vorhangklinke 3 ist als Kurvenscheibe 6 ausgebildet, deren Bedeutung weiter unten beschrieben wird. Die Vorhangklinke 3 steht im Eingriff mit einer ersten Halteklinke 7, die um eine ortsfeste Achse 8 schwenkbar gelagert ist. Die Halteklinke 7 ist als zweiarmiger Hebel ausgebildet und weist eine erste Wirkfläche 9 und eine zweite Wirkfläche 10 auf.

Die mit dem zweiten Rollo verbundene Vorhangklinke 4 steht im Eingriff mit einer zweiten Halteklinke 11. Diese ist um eine ortsfeste Achse 12 schwenkbar gelagert und im Ausführungsbeispiel als einarmiger Hebel ausgeführt. Die Halteklinke 11 weist ebenfalls eine erste Wirkfläche 13 und eine zweite Wirkfläche 14 auf.

Der zweiten Wirkfläche 10 der ersten Halteklinke 7 gegenüber liegend ist der Ankerhebel 15 eines ersten Impulsmagneten 16 angeordnet. Der Ankerhebel 15 ist um eine Achse 17 drehbar gelagert. Der zweiten Wirkfläche 14 der zweiten Halteklinke 11 gegenüber liegend ist der Ankerhebel 18 eines zweiten Impulsmagneten 19 angeordnet. Der Ankerhebel 18 ist um eine Achse 20 drehbar gelagert.

Durch Bewegen eines mit dem Kamera-Auslöseknopf gekoppelten Hebels 21 wird ein Auslösekontakt 22 geschlossen. Das führt über eine hier nicht weiter dargestellte elektrische Leitung zu einer kurzzeitigen Bestromung des ersten Impulsmagneten 16, der daraufhin den Ankerhebel 15 freigibt. Der Ankerhebel 15 löst durch Drehung um seine Achse 17 im Uhrzeigersinn und Stoß auf die Wirkfläche 10 die Klinkenverbindung zwischen der ersten Vorhangklinke 3 und der ersten Halteklinke 7 und gibt damit den ersten Verschlußvorhang zum Ablauf frei. Nach Ablauf einer vorgegebenen Verschlußzeit wird analog der Impulsmagnet 19 bestromt, der daraufhin den Ankerhebel 18 freigibt. Durch Drehung des Ankerhebels 18 um seine Achse 20 im Uhrzeigersinn und Stoß gegen die Wirkfläche 14 der zweiten Halteklinke 11 wird auch hier die Klinkenverbindung mit der zweiten Vorhangklinke 4 gelöst, so daß der zweite Verschlußvorhang ablaufen kann.

Die im linken Figurenteil gezeigten mechanischen Elemente haben in dieser Lage keine Funktion. Um sie in Funktionsstellung zu bringen, wird ein Exzenter 23 um eine Achse 24 gedreht. Der Exzenter 23 ist dazu mit einem hier nicht dargestellten Betriebsarten-Wahlschalter 41 am äußeren Kameragehäuse gekoppelt.

Am Exzenter 23 liegt ein Stellhebel 25 an, der um eine ortsfeste Achse 26 schwenkbar gelagert ist. Der Stellhebel 25 ist als einarmiger Hebel ausgebildet, der einen festen ersten Steuerhebel 27 bildet und an den ein zweiter Steuerhebel 28 über einen Zapfen 33 angelenkt ist. Der erste Steuerhebel 27 weist einen Zapfen 29 auf, an dem ein Ausklinkhebel 30 mit einer Stoßfläche 31 anliegt. Der Ausklinkhebel 30 ist an dem über den Kamera-Auslöseknopf betätigten Hebel 21 um eine Achse 32 schwenkbar gelagert.

Bei einer Drehung des Exzenters 23 wird der Stellhebel 25 im Uhrzeigersinn um seine Achse 26 geschwenkt und bewegt dabei über den Zapfen 29 den Ausklinkhebel 30, so daß dessen Stoßfläche 31 in Wirkstellung gegenüber der ersten Wirkfläche 9 an der ersten Halteklinke 7 kommt. Außerdem wird der zweite Steuerhebel 28 mit seiner Nase 34 in Wirkstellung zur ersten Wirkfläche 13 an der Halteklinke 11 gebracht. Der Steuerhebel 28 weist kopfseitig außerdem einen keilförmigen Bereich 35 auf, der dabei gleichzeitig in Wirkstellung zur Kurvenscheibe 6 an der ersten Vorhangklinke 3 geschoben wird.

Durch Bewegen des mit dem Kamera-Auslöseknopf gekoppelten Hebels 21 und des daran hängenden Ausklinkhebels 30 wird wieder zunächst die Klinkenverbindung zwischen der ersten Vorhangklinke 3 und der Halteklinke 7 gelöst. Beim Ablaufen des ersten Verschlußvorhangs kommt die Kurvenscheibe 6 in einer bestimmten Winkelstellung mit dem keilförmigen Bereich 35 an dem zweiten Steuerhebel 28 in Kontakt und drückt dessen Nase 34 gegen die erste Wirkfläche 13 an der zweiten Halteklinke 11. Dadurch wird auch die Klinkenverbindung zwischen der Halteklinke 11 und der Vorhangklinke 4 gelöst, so daß der zweite Verschlußvorhang ablaufen kann.

Die Zeitverzögerung zur Auslösung der zweiten Klinkenverbindung hängt ersichtlich von der Stellung des keilförmigen Bereichs 35 am Steuerhebel 28 relativ zur Kurvenscheibe 6 an der ersten Vorhangklinke 3 ab. Diese Stellung wird durch den Drehwinkel des Exzenters 23 bestimmt, der somit eine Verschlußzeitenvorwahl ermöglicht, die insbesondere für ausgewählte Standardzeiten ausreichend genau ist. Die Stoßfläche 31 am Ausklinkhebel 30 ist ausreichend groß zu wählen, damit auch bei unterschiedlichen Stellungen des Stellhebels 25 eine sichere Einwirkung auf die Halteklinke 7 gegeben ist.

Mit der Drehung des Exzenters 23 gekoppelt ist ein Schalter 39, der beim Einschwenken des Stellhebels 25 in die mechanisch gesteuerte Funktionsbereitschaft die Bestromungsleitung zwischen dem Auslösekontakt 22 und den Impulsmagneten 16, 19 unterbricht.

Fig. 2 zeigt eine Variante zur Sperrung bzw. Freigabe der mechanisch gesteuerten Verschlußauslösung. Mit dem Kamera-Auslöseknopf gekoppelt ist eine Stange 36, an deren unterem Ende ein Halteblech 37 befestigt ist. Auf dem Halteblech 37 liegt die in diesem Ausführungsbeispiel längsverschieblich gelagerte Drehachse 8 der ersten Halteklinke 7 unter der Wirkung einer Zugfeder 38 kraftschlüssig auf. Die Drehachse ist mit der Halteklinke 7 fest verbunden.

In der dargestellten Stellung des Exzenters 23 steht der Steuerhebel 27 des Stellhebels 25 direkt in Wirkstellung zur ersten Wirkfläche 9 der Halteklinke 7 und verhindert eine weitere Abwärtsbewegung der Halteklinke 7 durch die Zugfeder 38. Der angelenkte Steuerhebel 28 ist außerhalb seiner Wirkstellung gegenüber der Halteklinke 11.

Beim Absenken der Stange 36 unter dem Druck des Kamera-Auslöseknopfes betätigt das Halteblech 37 analog dem Hebel 21 in Fig. 1 den Auslösekontakt 22, so daß der Impulsmagnet 16 bestromt wird und die bereits beschriebene elektronisch gesteuerte Verschlußauslösung abläuft.

Nach einer bestimmten Drehung des Exzenters 23 kommt der Steuerhebel 27 aus seiner Wirkstellung gegenüber der Wirkfläche 9 der Halteklinke 7 heraus. Beim Absenken des Halteblechs 37 folgt daher die Halteklinke 7 unter der Wirkung der Zugfeder 38 der Verschiebung des Halteblechs 37. Dabei verschiebt sich der Klinkeneingriff der Halteklinke 7 gegenüber der Vorhangklinke 3 in vertikaler Richtung und gibt diese schließlich zur bereits beschriebenen mechanisch gesteuerten Verschlußauslösung frei. Die Bestromung der Impulsmagnete 16, 19 wird dabei durch den mit dem Exzenter 23 gekoppelten Schalter 39 unterbrochen.

Aus dem in Fig. 3 dargestellten Blockschaltbild ist die Bestromung bei elektronisch gesteuerter und mechanisch gesteuerter Verschlußauslösung ersichtlich. Die Spannungsversorgung der Kamera ist durch einen Ein-/Aus-Schalter 40 eingeschaltet. Der Auslösekontakt 22 ist zunächst geöffnet. Der Exzenter 23 ist über einen Betriebsarten-Wahlschalter 41 in eine Stellung gebracht, die der elektronisch gesteuerten Verschlußauslösung gemäß Fig. 1 entspricht. Der Schalter 39 ist daher geschlossen, so daß bei Betätigung des Kamera-Auslöseknopfes in Pfeilrichtung 2 über den Hebel 21 der Auslösekontakt 22 geschlossen wird. Dadurch gelangt ein Spannungsimpuls auf den Impulsmagneten 16 und bewirkt den bereits beschriebenen Abfall seines Ankerhebels. Gleichzeitig gelangt der Auslöseimpuls auch auf einen Zeitbildner 42, der mit einer vorgewählten oder automatisch gebildeten Zeitverzögerung den Auslöseimpuls auf den zweiten Impulsmagneten 19 weiterleitet, der danach auch seinen Ankerhebel abwirft.

Dem Ein-/Aus-Schalter 40 ist eine gestrichelt dargestellte zweite Schaltstellung zugeordnet, die vor dem Abschalten der Spannungsversorgung durchlaufen werden muß. In dieser Schaltstellung wird über ein Logikgatter 43 an dem Zeitbildner 42 vorbei ein Auslöseimpuls auf den zweiten Impulsmagneten 19 gegeben, wenn vorher vom Betriebsarten-Wahlschalter 41 ein Signal für die Wahl der elektronisch gesteuerten Verschlußauslösung und über den Auslösekontakt 22 ein Signal für den Ablauf des ersten Verschlußvorhanges auf das Logikgatter 43 geleitet wurde. Dadurch ist sichergestellt, daß auch der Impulsmagnet 19 vor einer endgültigen Spannungsabschaltung noch seinen Ankerhebel abwirft und damit auch den Ablauf des zweiten Verschlußvorhanges auslöst. Da der zweite Verschlußvorhang in der Ruhestellung der Kamera die Filmebene verschließt, wird eine Fehlbelichtung eines in der Filmebene liegenden Films verhindert.

In Fig. 4 ist der Spannungsverlauf des Auslöseimpulses für die Impulsmagnete 16, 19 dargestellt. Der bauartspezifische Abwurfstrom, bei dem die Permanentmagnetkräfte überwunden werden, soll z.B. bei einem Spannungspegel von 2 V erreicht werden. Aufgrund vorhandener Induktivitäten kann sich der zugehörige Strom nur mit asymptotischem Zeitverlauf nach etwa 2 - 3 ms gegen den gestrichelt dargestellten Spannungpegel aufbauen. Ein zeitlich exakt gesteuerter Abwurf des Ankerhebels ist damit nicht möglich. Es wird daher ein in etwa 0,1 ms steil ansteigender Spannungsimpuls von etwa 6 V Spitze auf die Impulsmagnete gegeben. Dieser Spannungsimpuls fällt danach innerhalb etwa einer 1 ms auf den angenommenen Abwurfwert von 2 V ab. Bei dem durch den Pfeil angezeigten Spannungswert, d.h. nach etwa 0,7 ms, wird der Ankerhebel abgeworfen. Diese Entlastung des Impulsmagneten führt aufgrund der Induktivitäten nochmals zu einem kurzen Spannungsanstieg, bevor der bauartspezifische Spannungswert von 2 V eingenommen wird, bei dem ein unbeabsichtigter Anzug des Ankerhebels sicher unterbleibt. Eine Beschädigung des Impulsmagneten durch den an sich nicht vorgesehenen hohen Spitzenimpuls konnte in überraschender Weise nicht beobachtet werden.

Die dargestellte Strom-Spannungs-Einspeisung in die Impulsmagnete 16, 19 kann z.B. über einen strommessenden OP-Verstärker oder über die Proportionalität zwischen Gate-Spannung und Source-Drain-Strom eines MOS-FET eingestellt werden.

Die Reproduzierbarkeit des Zeitpunkts für den Abwurf des Ankerhebels liegt im Rahmen der für die Genauigkeit der Belichtungseinstellung geforderten Toleranzen. Mit Vorteil werden zwei Impulsmagnete mit übereinstimmenden Abwurfcharakteristiken miteinander kombiniert, die also die gleiche Zeitverzögerung zwischen Beginn des Auslöseimpulses und dem tatsächlichen Abwurf des Ankerhebels aufweisen. Die Zeitverzögerung hat dann auf die vorgewählte Belichtungszeit keinen Einfluß, so daß insbesondere sehr kurze Belichtungszeiten mit hoher Genauigkeit erreicht werden können.

Neben der wahlweisen Einstellung einer rein mechanisch gesteuerten und einer rein elektronisch gesteuerten Verschlußauslösung ist auch eine Mischform möglich. Bei der in Fig. 1 dargestellten Wirkungskette kann der Impulsmagnet 16 mit seinem Ankerhebel 15 weggelassen werden und der Ausklinkhebel 30 durch eine vom Stellhebel 25 unabhängige Führung in ständiger Wirkstellung zur ersten Halteklinke 7 angeordnet werden. Alle übrigen Funktionsteile können unverändert bleiben. Für die elektronisch gesteuerte Auslösung des zweiten Verschlußvorhanges ist dann jedoch ein Signalgeber für den Start des ersten Verschlußvorhanges vorzusehen, der nur mechanisch ausgelöst wird. Dies kann z.B. ein nach dem Ablauf des Verschlußvorhanges freigegebener elektrischer Schalter oder eine vom Verschlußvorhang durchlaufene Lichtschranke sein. Das so erzeugte Startsignal wird auf den Zeitbildner 42 gegeben und löst in der beschriebenen Weise den Impulsmagneten 19 aus.

Aus Platzgründen oder der Notwendigkeit von Änderungen in der Bewegungsrichtung kann es erforderlich sein, an den beschriebenen Wirkflächen weitere Zwischenhebel oder andere Getriebeelemente einzufügen. Die prinzipielle Wirkungsweise der wahlweise einstellbaren mechanisch oder elektronisch gesteuerten Verschlußauslösung wird dadurch nicht beeinflußt. Außerdem können zur Anlage der schwenkbaren Hebel und zur Rückstellung der Klinkenverbindungen beim erneuten Verschlußaufzug in den Drehachsen in an sich bekannter Weise Federn vorgesehen sein. Der Drehbereich der Ankerhebel 15, 18 wird zweckmäßigerweise so begrenzt, daß sie beim Verschlußaufzug von den durch Federspannung zurückfallenden Halteklinken 7, 11 mitgenommen werden können und in den Anzugbereich der Permanentmagnetkräfte der Impulsmagnete 16, 19 gelangen. Die dabei von den Halteklinken 7, 11 aufzubringenden Rückstellkräfte müssen jedoch verhältnismäßig groß sein.

Zweckmäßiger ist es daher, das Rücksetzen der Ankerhebel 15,18 über nicht weiter dargestellte separate Federspeicher und Hebelmechaniken zu bewirken, die gleichzeitig mit dem Verschlußaufzug gespannt werden. Diese Federspeicher können z.B. am Ende der Bewegung der zweiten Vorhangklinke 4 durch diese ausgelöst werden und über eine einfache Hebelmechanik die Ankerhebel 15, 18 wieder in ihre Ausgangslage bringen. Der Vorteil dieser Anordnung besteht darin, daß auch bei nicht gespanntem Kameraverschluß die Impulsmagnete immer geschlossen sind. Ein Verschmutzen der Magnetkontakte wird damit vermieden.

Werden die Ankerhebel 15, 18 dagegen erst mit dem erneuten Verschlußaufzug durch Betätigen von speziellen, mit dem Verschluß gekoppelten Anlegehebeln angelegt, so ist darauf zu achten, daß einerseits eine sichere Anlage der Ankerhebel erreicht wird und andererseits der über den Aufzug ausgeübte Anlegedruck nicht so groß wird, daß die Impulsmagnete aus ihrer Verankerung gelöst werden. Beim formschlüssigen Anlegen, z.B. über einen nockengesteuerten Anlegehebel, kann dieser Schutz durch Zwischenschalten von sogen. Überhubfedern erreicht werden, die den Anlegedruck bei einem möglicherweise zu großen Hub des Anlegehebels auffangen. Beim kraftschlüssigen Anlegen kann der nockengesteuerte Anlegehebel mit einem Federspeicher versehen und z.B. zum Anlegen beider Ankerhebel gleichzeitig genutzt werden. Beim Spannen der Kamera dient der Nocken dazu, den federgespannten Anlegehebel freizugeben. Dieser legt dann ebenfalls über eine zwischengeschaltete Überhubfeder zuerst einen der beiden Ankerhebel an, bewegt sich dann aber weiter und kommt erst bei Anlage des zweiten Ankerhebels zum Stillstand. Das zwischengeschaltete Federelement gleicht hier die Hubdifferenz zwischen der Anlage des ersten und zweiten Ankerhebels aus.

### Bezugszeichenliste

- 1: Massesymbol
- 2: Auslöserrichtung
- 3: erste Vorhangklinke
- 4: zweite Vorhangklinke
- 5: Drehachse Vorhangwalze
- 6: Kurvenscheibe
- 7: erste Halteklinke
- 8: Achse erste Halteklinke
- 9: erste Wirkfläche an erster Halteklinke
- 10: zweite Wirkfläche an erster Halteklinke
- 11: zweite Halteklinke
- 12: Achse zweite Halteklinke
- 13: erste Wirkfläche an zweiter Halteklinke
- 14: zweite Wirkfläche an zweiter Halteklinke
- 15: erster Ankerhebel
- 16: erster Impulsmagnet
- 17: Drehachse erster Ankerhebel
- 18: zweiter Ankerhebel
- 19: zweiter Impulsmagnet
- 20: Drehachse zweiter Ankerhebel
- 21: Hebel
- 22: Auslösekontakt
- 23: Exzenter

- 24: Drehachse Exzenter
- 25: Stellhebel
- 26: Achse Stellhebel
- 27: erster Steuerhebel
- 28: zweiter Steuerhebel
- 29: Zapfen an erstem Steuerhebel
- 30: Ausklinkhebel
- 31: Stoßfläche an Ausklinkhebel
- 32: Achse Ausklinkhebel
- 33: Anlenkzapfen zweiter Steuerhebel
- 34: Nase zweiter Steuerhebel
- 35: keilförmiger Bereich zweiter Steuerhebel
- 36: Stange
- 37: Halteblech
- 38: Zugfeder
- 39: Schalter
- 40: Ein-/Aus-Schalter
- 41: Betriebsarten-Wahlschalter
- 42: Zeitbildner
- 43: Logikgatter

## Patentansprüche

1. Verschluß für eine fotografische Kamera mit einem ersten und einem zweiten vorgespannten Verschluß-Vorhang, die jeweils durch eine erste und eine zweite schwenkbar gelagerte Halteklinke (7, 11) im Zusammenwirken mit einer ersten und zweiten Vorhangklinke (3, 4) im gespannten Zustand gehalten werden, wobei die erste Halteklinke (7) mit einem Kamera-Auslöser zur Freigabe des ersten Vorhangs gekoppelt ist und die zweite Halteklinke (11) mit einer in Abhängigkeit von der Auslösung des ersten Vorhangs gesteuerten Auslösevorrichtung zur Freigabe des zweiten Vorhangs gekoppelt ist, mit einer mechanisch gesteuerten Vorhang-Freigabe-Einrichtung, **gekennzeichnet durch** eine elektronischgesteuerte Vorhang-Freigabe Einrichtung und **dadurch,** daß der ersten und zweiten Halteklinke (7, 11) jeweils erste und zweite bewegungsauslösende Wirkflächen (9, 10; 13, 14) zugeordnet sind, die jeweils wahlweise mit der mechanisch gesteuerten oder der elektronisch gesteuerten Vorhang-Freigabe-Einrichtung koppelbar sind.

2. Verschluß nach Anspruch 1, wobei die mechanisch gesteuerte Vorhang-Freigabe-Einrichtung einen Exzenter (23) enthält, an dem ein schwenkbarer Stellhebel (25) anliegt, der einen festen ersten Steuerhebel (27) und einen angelenkten zweiten Steuerhebel (28) enthält, wobei durch Drehen des Exzenters (23) mit dem ersten Steuerhebel (27) ein Ausklinkhebel (30) in Wirkstellung zu der ersten Wirkfläche (9) der ersten Halteklinke (7) und der zweite Steuerhebel (28) in Wirkstellung zu der ersten Wirkfläche (13) der zweiten Halteklinke (11) bringbar sind.

3. Verschluß nach Anspruch 1, wobei die erste Halteklinke (7) zur mechanisch gesteuerten Vorhang-Freigabe in Richtung ihrer Schwenkachse (8) verschiebbar ist und ein Exzenter (23) vorgesehen ist, an dem ein schwenkbarer Stellhebel (25) anliegt, der einen festen ersten Steuerhebel (27) und einen angelenkten zweiten Steuerhebel (28) enthält, wobei durch Drehen des Exzenters (23) der erste Steuerhebel (27) aus einer die Verschiebung der ersten Halteklinke (7) sperrenden Stellung an der ersten Wirkfläche (9) heraus bringbar und der zweite Steuerhebel (28) in Wirkstellung zu der ersten Wirkfläche (13) der zweiten Halteklinke (11) hinein bringbar sind.

4. Verschluß nach einem der Ansprüche 1 bis 3, wobei durch die über die Drehung des Exzenters (23) erzeugte Wirkstellung des zweiten Steuerhebels (28) eine Zeitverzögerung für das Einwirken auf die zweite Halteklinke (11) einstellbar ist.

5. Verschluß nach Anspruch 4, wobei die erste Vorhangklinke (3) als Kurvenscheibe (6) ausgebildet ist, die nach Freigabe des ersten Vorhangs in der Wirkstellung des zweiten Steuerhebels (28) auf diesen zur Auslösung des zweiten Vorhangs einwirkt.

6. Verschluß nach einem der Ansprüche 2 bis 5, wobei der Exzenter (23) zur Drehung mit einem Betriebsarten-Wahlschalter (41) für mechanische oder elektronische Belichtungszeiteinstellung gekoppelt ist, wobei in einer Stellung für mechanisch gesteuerte Belichtungszeiteinstellung ein Schalter (39) in der Bestromungsleitung für die elektronische Belichtungszeiteinstellung geöffnet wird.

7. Verschluß nach einem der vorangehenden Ansprüche, wobei ein erster und ein zweiter Impulsmagnet (16, 19) mit einem ersten und zweiten Ankerhebel (15, 18) als Auslöser für die Vorhang-Freigabe vorgesehen sind, die jeweils in Wirkstellung zu einer der zweiten Wirkflächen (10, 14) der Halteklinken (7, 11) angeordnet sind.

8. Verschluß nach Anspruch 7, wobei der Kamera-Auslöser mit einem elektronischen Schalter (22) gekoppelt ist, durch den eine kurzzeitige Bestromung des der ersten Halteklinke (7) zugeordneten Impulsmagneten (16) und dazu über einen Zeitbildner (42) zeitlich verzögert eine Bestromung des der zweiten Halteklinke (11) zugeordneten Impulsmagneten (19) auslösbar ist, so daß die jeweiligen Ankerhebel (15, 18) zum Anschlag gegen die ihnen zugeordneten Wirkflächen (10, 14) der Halteklinken (7, 11) bringbar sind.

9. Verschluß nach Anspruch 8, wobei die Bestromung einen Pegelverlauf hat, der mit einem steil ansteigenden, deutlich über der üblichen Abwurfspannung liegenden Signalpegel beginnt und danach schnell auf den Wert des bauartspezifischen Abwurfwertes abfällt.

10. Verschluß nach einem der vorhergehenden Ansprüche, wobei an der Kamera ein Ein-/Aus-Schalter (40) vorgesehen ist, der vor einer Stromabschaltung der Kamera im Zusammenwirken mit einem Logikgatter (43) nach einer bereits erfolgten Bestromung des ersten Impulsmagneten (16) unabhängig von einer vorgegebenen Zeitverzögerung den zweiten Impulsmagneten (19) bestromt.

11. Verschluß nach einem der vorhergehenden Ansprüche, wobei als Verschluß-Vorhang ein Rollo vorgesehen ist.

## Claims

1. Shutter for a photographic camera, having a first and a second pretensioned shutter curtain which are respectively retained in the tensioned state by a first and a second pivotably mounted retaining latch (7, 11) in interaction with a first and second curtain latch (3, 4), the first retaining latch (7) being coupled to a camera release for enabling release of the first curtain, and the second retaining latch (11) being coupled to a release device, which is controlled as a function of the release of the first curtain, for enabling release of the second curtain with a mechanically controlled curtain-release enabling device, **characterized by** an electronically controlled curtain-release enabling device and **characterized in that** the first and second retaining latches (7, 11) are respectively assigned first and second movement-releasing active surfaces (9, 10; 13, 14) which are each coupled either to the mechanically controlled or the electronically controlled curtain-release enabling device.

2. Shutter according to Claim 1, wherein the mechanically controlled curtain-release enabling device contains an eccentric (23) against which a pivotable adjusting lever (25) bears, said adjusting lever containing a fixed, first control lever (27) and an articulated, second control lever (28), rotation of the eccentric (23) by the first control lever (27) enabling an unlatching lever (30) to be brought into an active position with respect to the first active surface (9) of the first retaining latch (7) and the second control lever (28) to be brought into an active position with respect to the first active surface (13) of the second retaining latch (11).

3. Shutter according to Claim 1, wherein, for the mechanically controlled curtain-release enabling means, the first retaining latch (7) can be displaced in the direction of its pivot spindle (8) and an eccentric (23) is provided against which a pivotable adjusting lever (25) bears, said adjusting lever containing a fixed, first control lever (27) and an articulated, second control lever (28), rotation of the eccentric (23) enabling the first control lever (27) to be brought out of a position on the first active surface (9), which position blocks the displacement of the first retaining latch (7) and enabling the second control lever (28) to be brought into an active position with respect to the first active surface (13) of the second retaining latch (11).

4. Shutter according to one of Claims 1 to 3, wherein through the active position of the second control lever (28), which active position is produced via the rotation of the eccentric (23), a time delay for the action upon the second retaining latch (11) can be set.

5. Shutter according to Claim 4, wherein the first curtain latch (3) is designed as a cam plate (6) which, after release of the first curtain in the active position of the second control lever (28), acts upon the latter for the purpose of enabling release of the second curtain.

6. Shutter according to one of Claims 2 to 5, wherein the eccentric (23) is coupled for rotational purposes to a mode selector switch (41) for mechanical or electronic setting of the exposure time, in which case in a position for mechanically controlled setting of the exposure time a switch (39) in the power-supply line for the electronic setting of the exposure time is opened.

7. Shutter according to one of the preceding claims, wherein a first and a second pulsed magnet (16, 19) are provided with a first and second armature lever (15, 18) as releases for the curtain-release enabling means, said armature levers each being arranged in an active position with respect to one of the two active surfaces (10, 14) of the retaining latches (7, 11).

8. Shutter according to Claim 7, wherein the camera release is coupled to an electronic switch (22) by means of which a temporary supply of power to the pulsed magnet (16) assigned to the first retaining latch (7) and therewith, in a temporally delayed manner via a timer (42), a supply of power to the pulsed magnet (19) assigned to the second retaining latch (11) can be released, with the result that the respective armature levers (15, 18) can be brought to a stop against the active surfaces (10, 14) assigned to them of the retaining latches (7, 11).

9. Shutter according to Claim 8, wherein the power supply has a level profile which begins with a steeply rising signal level which lies clearly above the usual discharging voltage and then drops rapidly to the value of the design-specific discharging value.

10. Shutter according to one of the preceding claims, wherein an on/off switch (40) is provided on the camera, which switch prior to a disconnection of the power supply to the camera and in interaction with a logic gate (43) after power has already been supplied to the first pulsed magnet (16) supplies power to the second pulsed magnet (19) irrespective of a predetermined time delay.

11. Shutter according to one of the preceding claims, wherein a rolling screen is provided as the shutter curtain.

## Revendications

1. Obturateur pour une caméra photographique avec un premier et un deuxième rideaux d'obturateur précontraints, qui sont maintenus chacun dans l'état contraint par un premier et un deuxième cliquets de retenue pivotants (7, 11) en coopération avec un premier et un deuxième cliquets de rideau (3, 4), le premier cliquet de retenue (7) étant accouplé à un déclencheur de caméra pour libérer le premier rideau et le deuxième cliquet de retenue (11) étant accouplé à un dispositif de déclenchement commandé en fonction du déclenchement du premier rideau pour libérer le deuxième rideau, avec un dispositif de libération de rideau commandé mécaniquement, **caractérisé par** un dispositif de libération de rideau commandé électroniquement et en ce que l'on associe au premier et au deuxième cliquets de retenue (7, 11) à chaque fois une première et une deuxième surfaces actives déclenchant le mouvement (9, 10 ; 13, 14), qui peuvent être accouplées chacune de manière sélective au dispositif de libération de rideau commandé mécaniquement ou au dispositif de libération de rideau commandé électroniquement.

2. Obturateur selon la revendication 1, dans lequel le dispositif de libération de rideau commandé mécaniquement comprend un excentrique (23), sur lequel s'applique un levier de réglage pivotant (25) qui comprend un premier levier de commande fixe (27) et un deuxième levier de commande articulé (28), dans lequel, par rotation de l'excentrique (23) avec le premier levier de commande (27), un levier de désengagement (30) peut être amené dans une position fonctionnelle par rapport à la première surface active (9) du premier cliquet de retenue (7) et le deuxième levier de commande (28) peut être amené dans une position fonctionnelle par rapport à la première surface active (13) du deuxième cliquet de retenue (11).

3. Obturateur selon la revendication 1, dans lequel le premier cliquet de retenue (7) peut être déplacé par rapport au dispositif de libération de rideau commandé mécaniquement dans la direction de son axe de pivotement (8), et un excentrique (23) est prévu, sur lequel s'applique un levier de réglage pivotant (25), qui contient un premier levier de commande fixe (27) et un deuxième levier de commande articulé (28), dans lequel, par rotation de l'excentrique (23), le premier levier de commande (27) peut être ressorti d'une position bloquant le déplacement du premier cliquet de retenue (7) contre la première surface active (9) et le deuxième levier de commande (28) peut être amené dans la position fonctionnelle vers la première surface active (13) du deuxième cliquet de retenue (11).

4. Obturateur selon l'une quelconque des revendications 1 à 3, dans lequel un retard d'effet sur le deuxième cliquet de retenue (11) peut être ajusté par la position fonctionnelle du deuxième levier de commande (28) produite par la rotation de l'excentrique (23).

5. Obturateur selon la revendication 4, dans lequel le premier cliquet de rideau (3) est réalisé sous la forme d'une came (6) qui agit après la libération du premier rideau dans la position fonctionnelle du deuxième levier de commande (28) sur celui-ci pour déclencher le deuxième rideau.

6. Obturateur selon l'une quelconque des revendications 2 à 5, dans lequel l'excentrique (23) est accouplé en vue de la rotation à un commutateur sélectif en fonction des modes de fonctionnement (41) pour un ajustage du temps d'exposition mécanique ou électrique, un commutateur (39) étant ouvert dans la ligne d'alimentation électrique pour l'ajustement du temps d'exposition électronique dans une position pour l'ajustement du temps d'exposition commandé mécaniquement.

7. Obturateur selon l'une quelconque des revendications précédentes, dans lequel un premier et un deuxième aimants pulsés (16, 19) sont pourvus d'un premier et d'un deuxième levier d'armature (15, 18) en tant que déclencheurs pour la libération des rideaux, lesquels sont disposés à chaque fois dans la position fonctionnelle par rapport à l'une des deuxièmes surfaces actives (10, 14) des cliquets de retenue (7, 11).

8. Obturateur selon la revendication 7, dans lequel le déclencheur de caméra est accouplé à un commutateur électronique (22), qui permet de déclencher une alimentation électrique brève de l'aimant pulsé (16) associé au premier cliquet de retenue (7) et à cet effet de déclencher de manière retardée dans le temps par le biais d'un formateur d'image (42), une alimentation de l'aimant pulsé (19) associé au deuxième cliquet de retenue (11), de sorte que les leviers d'armature respectifs (15, 18) puissent être amenés en butée contre les surfaces actives associées (10, 14) des cliquets de retenue (7, 11).

9. Obturateur selon la revendication 8, dans lequel l'alimentation a une courbe de niveau qui commence avec un niveau de signal augmentant fortement, situé nettement au-dessus de la tension de décharge usuelle, puis chute rapidement au niveau de la valeur de décharge spécifique construction.

10. Obturateur selon l'une quelconque des revendications précédentes, dans lequel un commutateur d'enclenchement/désenclenchement (40) est prévu sur la caméra, lequel, avant un arrêt du courant de la caméra, en coopération avec une porte logique (43) après l'alimentation déjà effectuée du premier aimant pulsé (16) fait circuler un courant à travers le deuxième aimant pulsé (19) indépendamment d'un retard prédéfini.

11. Obturateur selon l'une quelconque des revendications précédentes, dans lequel on prévoit comme rideau d'obturation un écran enroulable.
